# NEUE EUROPÄISCHE PATENTSCHRIFT

(11) **EP 1 109 707 B2**
(45) Veröffentlichungstag und Bekanntmachung des Hinweises auf die Entscheidung über den Einspruch: **30.12.2009**
(45) Hinweis auf die Patenterteilung: 08.10.2003
(21) Anmeldenummer: 99939381.2
(22) Anmeldetag: 16.07.1999
(51) Int. Cl.: B60T 11/236, F16J 15/32

(54) **HAUPTZYLINDER**
MASTER CYLINDER
MAITRE-CYLINDRE

(30) Priorität: 31.08.1998 DE 19839597
(43) Veröffentlichungstag der Anmeldung: 27.06.2001
(73) Patentinhaber: Continental Teves AG & Co. oHG, 60488 Frankfurt (DE)
(72) Erfinder: HENNEMANN, Karl-Heinz, D-61352 Bad Homburg (DE); KÖNIG, Harald, D-61239 Ober-Mörlen (DE)
(86) Internationale Anmeldenummer: PCT/EP1999/005097
(87) Internationale Veröffentlichungsnummer: WO 2000/012367

(56) Entgegenhaltungen:
- EP-A- 0 964 191
- EP-B1- 0 519 533
- DE-A- 4 425 403
- DE-A- 19 615 157
- DE-C- 19 610 834
- US-A- 5 183 271

## Beschreibung

Die Erfindung betrifft einen Hauptzylinder mit einem Kolben für eine hydraulische Fahrzeugbremsanlage mit in einem Hohlraum angeordnetem Zentralventil und einem Dichtungseinsatz mit einem Tragkörper und einem mit dem Tragkörper adhäsiv verbundenen gummielastischen Dichtkörper.

Bei Fahrzeugen, welche beispielsweise mit einem Anti-Blockier-System (ABS) oder einem Antriebsschlupfregelsystem (ASR) ausgerüstet sind, bildet üblicherweise ein sogenannter Tandem-Hauptzylinder (THZ) mit Zentralventil einen wesentlichen Bestandteil der hydraulischen Bremsanlage. Mit Hilfe eines solchen THZ mit Zentralventil wird im Gegensatz zu Hauptzylindern mit radial verlaufenden Nachlaufbohrungen, den sogenannten Schnüffellöchern, eine zugehörige Dichtung (Primärmanschette) bei einem plötzlichen Bremsdruckaufbau im Rahmen eines ABS-oder ASR-Regeleingriffes nicht beschädigt.

Generell übernimmt das Zentralventil in dem Hohlraum des zugehörigen Kolbens die gleiche Funktion wie die Nachlaufbohrung zusammen mit der Primärmanschette, sorgt also für den notwendigen Mengen- und Druckausgleich an hydraulischer Bremsflüssigkeit zwischen dem Hauptzylinder und den hieran angeschlossenen Bremsleitungen im Rahmen einer Zweikreis-Bremsanlage. Mit anderen Worten entfällt die Ausgleichsbohrung, deren Funktion vom Zentralventil übernommen wird. Der in Rede stehende Dichtungseinsatz verschließt regelmäßig ein Ende des Gehäuses des THZ und nimmt in einer zugehörigen, von ihm umschlossenen, Bohrung den hierdurch betätigbaren Kolben abdichtend und axial verschieblich auf.

Derartige Dichtungseinsätze bestehen üblicherweise aus einem Tragkörper und einem mit dem Tragkörper adhäsiv verbundenen gummielastischen Dichtkörper. Dabei kann der vorgenannte Dichtkörper auf den Tragkörper aufgespritzt oder aufvulkanisiert sein (vergleiche DE-OS 39 32 248).

Ähnlich wird bei einem Dichtungseinsatz der eingangs beschriebenen Ausführungsform verfahren, bei welchem der Dichtkörper auf den Tragkörper vulkanisiert bzw. gegossen ist. Zusätzlich wird bei dieser Lehre ein ringförmiger Bund für den Tragkörper als unverzichtbar angesehen, um die Aufnahme axialer Kräfte zwischen zugehörigem Dichtkörper und Tragkörper zu verbessern (vergleiche DE-OS 42 15 079).

Schließlich wird bei einer anderen Ausführungsform so verfahren, daß Dichtkörper und Tragkörper lösbar miteinander verbunden sind und ein einstückig mit dem Tragkörper ringförmig umlaufener Vorsprung vorgesehen ist, welcher den Dichtkörper axial vollständig oder nahezu vollständig durchsetzt. Hierdurch will man ein definiertes Öffnen des Zentralventiles sicherstellen (vergleiche DE-PS 196 10 834).

Der zuvor zitierte Stand der Technik ist nicht frei von Mängeln. So wird eine einwandfreie Funktion des Zentralventiles regelmäßig damit erkauft, daß Dichtkörper und Tragkörper lösbar miteinander verbunden sind, folglich, was die Lagerhaltung und Montage angeht, Nachteile aufweisen. Denn üblicherweise ist man bei einer Serienfertigung im Automobilbau bestrebt, die Anzahl der zu montierenden Teile auf ein Minimum zu begrenzen (vergleiche DE-PS 196 10 834). Mit Blick auf die anderen Ausführungsformen ist festzuhalten, daß trotz verwirklichter Zusatzmaßnahmen wie dem ringförmigen Bund eine formschlüssige und über die gesamte Lebensdauer einwandfreie Verbindung zwischen Dichtkörper und Tragkörper nicht (immer) gewährleistet ist. - Hier will die Erfindung insgesamt Abhilfe schaffen.

Der Erfindung liegt das technische Problem zugrunde, einen Hauptzylinder der eingangs beschriebenen Ausgestaltung so weiterzubilden, daß bei einwandfreier Dichtungsfunktion das Zentralventil mit definierten Steuerzeiten arbeitet und gleichzeitig eine einfache und kostengünstige Herstellung ermöglicht wird, welche zugleich unter Rückgriff auf möglichst wenige Teile eine lange Lebensdauer gewährleistet.

Zur Lösung dieser Aufgabe schlägt die Erfindung einen gattungsgemäßen Hauptzylinder vor, welcher durch die Merkmale des kennzeichnenden Teils des Anspruchs 1 gekennzeichnet ist. Dabei sind die Durchgangsbohrungen im Vergleich zum regelmäßig ringförmigen Tragkörper im allgemeinen radial angeordnet.

Mit anderen Worten ist der Tragkörper größtenteils als Ring mit radialen Durchgangsbohrungen ausgeführt, d.h., daß die Durchgangsbohrungen den Tragkörper im Querschnitt vollständig durchsetzten. Selbstverständlich sind auch andere Ausgestaltungen des Tragkörpers (also keine Ringformen) im Rahmen der Erfindung denkbar, wenn auch nicht üblich, weil der zugeordnete Kolben sowie das Gehäuse des Hauptzylinders im allgemeinen zylindrisch ausgeführt sind.

Um eine besonders einfache Fertigung der Durchgangsbohrungen zu gewährleisten, weisen gegenüberliegende Durchgangsbohrungen parallele Begrenzungsflächen auf. Auf diese Weise lassen sich die Durchgangsbohrungen praktisch gleichzeitig in den Tragkörper einbringen.

Der Tragkörper ist im Querschnitt im allgemeinen umgekehrt-T-förmig mit T-Steg und T-Schenkeln ausgebildet. Dabei ist der T-Steg üblicherweise dem Zentralventil zugewandt, während der T-Schenkel vom Zentralventil abgewandt angeordnet ist. Die Durchgangsbohrungen können den T-Steg durchdringen, so daß im Zuge ihrer Herstellung der Tragkörper am T-Schenkel gehalten werden kann. Sofern die Durchgangsbohrungen nicht nachträglich eingebracht werden, es sich bei dem Tragkörper vielmehr um ein (Kunststoff-) Spritzgußteil handelt, läßt sich mit Blick auf diese Ausgestaltung der Erfindung festhalten, daß lediglich der (schmalere) T-Steg die Durchgangsbohrungen aufweist, so daß die Stabilität des Tragkörpers insgesamt nicht beeinträchtigt wird. Dies ist von besonderer Bedeutung, da zur Herstellung des Tragkörpers üblicherweise auf temperaturbeständige Duroplaste zurückgegriffen wird.

Der Dichtkörper ist in der Regel im Querschnitt umgekehrt U-förmig mit beidseitig des T-Steges angeordneten U-Schenkeln und stirnseitig des T-Steges befindlicher U-Basis ausgebildet. Das heißt, der Dichtkörper umhüllt gleichsam den T-Steg und steht mit den Kopfenden der jeweiligen U-Schenkeln auf dem T-Schenkel auf. Hierdurch ist bereits eine großflächige Verankerung zwischen Dichtkörper und Tragkörper im Zuge des An- bzw. Umspritzens mittels einer gummielastischen Dichtmasse (beispielsweise EPDM) gewährleistet. Selbstverständlich kann hier nach üblichen Verfahren, gegebenenfalls unter Zusatz von Haftvermittlern, gearbeitet werden.

Die U-Basis des Dichtkörpers weist eine Stärke auf, welche die Hälfte bis ein Fünftel, vorzugsweise ca. ein Drittel, der Stärke der U-Schenkel entspricht, so daß der T-Steg den Dichtkörper an dieser Stelle (das heißt im Bereich der U-Basis des Dichtkörpers) nahezu vollständig durchsetzt und elastische Verformungen der U-Basis nur begrenzt zuläßt. Mit anderen Worten legt sich die U-Basis nach bevorzugter Ausführungsform als gleichsam dünne Haut über den T-Steg des Tragkörpers. Hierdurch wird im Ergebnis der gleiche Effekt wie nach DE-PS 196 10 834 erreicht, nämlich daß sich das Zentralventil bzw. eine zugehörige Anschlagringscheibe weich und leicht gedämpft an den Dichtungseinsatz insgesamt anlegen kann. Gleichzeitig erfolgt nur eine geringe Verformung der gummielastischen U-Basis wegen deren geringer Stärke, so daß unabhängig von dem Druck, gegen welchen das Zentralventil geöffnet werden muß, ein definiertes Öffnen des Zentralventils sichergestellt ist.

Denn auf diese Weise wird ein starrer bzw. quasi starrer Anschlag für das Zentralventil zur Verfügung gestellt, ohne daß Einbußen bei der erreichbaren Dichtigkeit hingenommen werden müssen. Ein solches definiertes Öffnen des Zentralventils bzw. die zuverlässige und konstante Darstellung von Steuerzeiten des Zentralventils ist vorliegend von besonderer Bedeutung, weil insbesondere bei Bremsanlagen mit Bremsdruckregelsystem wie beispielsweise ABS oder ASR das Zentralventil gegebenenfalls gegen einen erheblichen Überdruck geöffnet werden muß, insbesondere dann, wenn direkt anschließend an z.B einen Antriebsschlupfregelzyklus eine ABS-Bremsung erforderlich ist. Tatsächlich hat in einem solchen Fall der im Rahmen der Antriebsschlupfregelung in der Druckkammer des Hauptzylinders bzw. Tandem-Hauptzylinders aufgebaute Bremsflüssigkeitsdruck vor der sich direkt anschließenden Bremsbetätigung keine Gelegenheit mehr, sich zu entspannen, weil das während des vorgenannten Regelzyklus zugeführte Fluidvolumen bzw. Bremsflüssigkeitsvolumen nicht in einen zugehörigen Fluidvorratsbehälter zurückgeleitet werden kann. Je nach dem, wie groß dieser noch vorherrschende Fluiddruck ist, variiert jedoch der Öffnungszeitpunkt des Zentralventiles, da dieses (über die Anschlagringscheibe) um so tiefer in den Dichtkörper des Dichtungseinsatzes eindringt, je höher der vorherrschende Druck ist. Folglich ist eine klare Definition des Öffnungszeitpunktes bzw. der Steuerzeiten des Zentralventiles erforderlich, um ein gleichbleibendes Bremsansprechverhalten zu gewährleisten. Dies gelingt im Rahmen der Erfindung durch die als gleichsam dünne Haut ausgebildete U-Basis des Dichtkörpers sowie den die U-Basis gleichsam unterfangenden T-Steg, welcher als Anschlag für das Zentralventil bzw. die zugehörige Anschlagringscheibe wirkt.

Nach einer weiteren bevorzugten Ausgestaltung der Erfindung sind mit den Durchgangsbohrungen komunizierende Querbohrungen vorgesehen. Dabei ist zumindest eine Querbohrung mit einer Durchgangsbohrung verbunden, wobei die Querbohrungen konzentrisch verteilt im T-Schenkel angeordnet sein können. Über die Querbohrungen läßt sich der zum Zwecke des Einspritzens flüssige gummielastische Werkstoff (z.B. EPDM) gleichzeitig in den Tragkörper unter Druck einfüllen und verteilt sich über die Durchgangsbohrungen in gewünschter Weise unter Bildung des im Querschnitt U-förmigen Dichtkörpers, dessen Außenkontur von einer entsprechenden (Spritz-) Form vorgegeben wird. Um eine größtmögliche Verwindungssteifigkeit des Dichtungseinsatzes insgesamt zu gewährleisten, sind die Durchgangsbohrungen und die Querbohrungen axial versetzt im Tragkörper angeordnet, überlappen sich also in Richtung der (Rotationssymmetrie-)Achse des Dichtungseinsatzes nicht.

Schließlich kann der einer (Einsatz-)Bohrung zugewandte U-Schenkel des Dichtkörpers eine V-förmig angeformte Bohrungsdichtlippe aufweisen, die sich auf dem T-Schenkel abstützt. Auch der der (Einsatz-)Bohrung abgewandte Schenkel des Dichtkörpers besitzt vorzugsweise eine V-förmig angeformte Kolbendichtlippe, welche sich ebenfalls auf dem T-Schenkel abstützt.

Im Ergebnis wird im Rahmen der Erfindung zunächst einmal eine zuverlässige Dichtigkeit mittels des Dichtungseinsatzes durch den an- bzw. umspritzten Dichtkörper erreicht. Die Steuerzeiten des Zentralventils werden dabei praktisch unabhängig vom vorherrschenden Fluiddruck, gegen welches es geöffnet werden muß nicht beeinflußt, so daß mit einem gleichbleibenden Bremsansprechverhalten zu rechnen ist. Gleichzeitig ist eine einfache und preiswerte Herstellung möglich, weil auf bewährte und kostengünstige Herstellungsverfahren und preiswerte Werkstoffe zurückgegriffen wird. Darüber hinaus ist die Montage vereinfacht, weil nur ein kompaktes Bauteil zur Verfügung gestellt wird, welches sich zudem automatisch montieren läßt. Durch die Verankerung des Dichtkörpers im Tragkörper mittels der Durchgangsbohrungen wird darüber hinaus eine besonders innige formschlüssige Verbindung zwischen den beiden vorgenannten Bestandteilen erreicht. Dies beeinflußt die Lebensdauer des Ventildichtungseinsatzes ausnahmslos positiv. Hierin sind die wesentlichen Vorteile der Erfindung zu sehen.

Im folgenden wird die Erfindung anhand einer lediglich ein Ausführungsbeispiel darstellenden Zeichnung näher erläutert; es zeigen:
- Figur 1: einen Ausschnitt aus einem Tandem-Hauptzylinder im Querschnitt;
- Figur 2: eine perspektivische Ansicht des Tragkörpers ohne angeformten Dichtkörper;
- Figur 3: eine Aufsicht auf den Gegenstand nach Figur 2;
- Figur 4: einen Längsschnitt durch Figur 2 im Bereich des T-Steges und
- Figur 5: einen Querschnitt durch Figur 2 mit angeformtem Dichtkörper, und zwar entlang der Linie A-B in Fig.3.

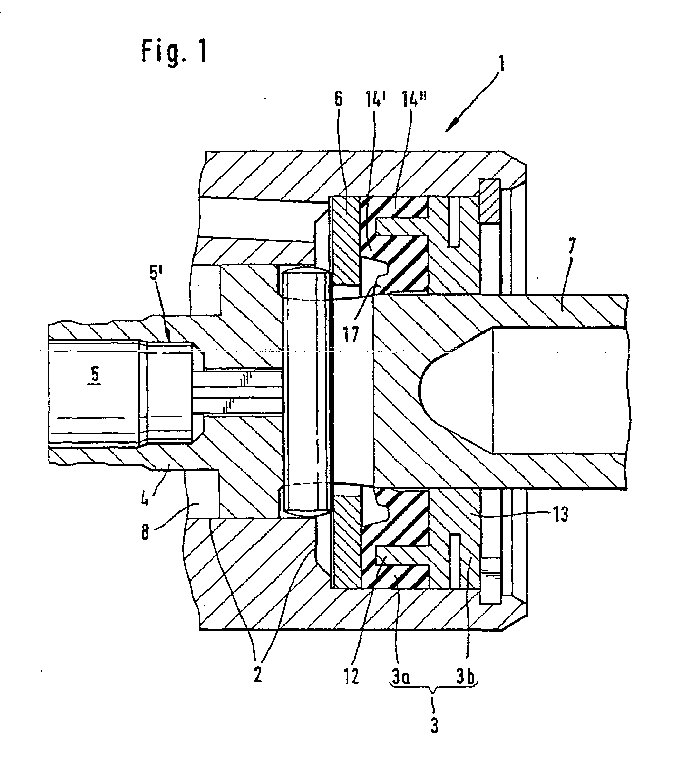

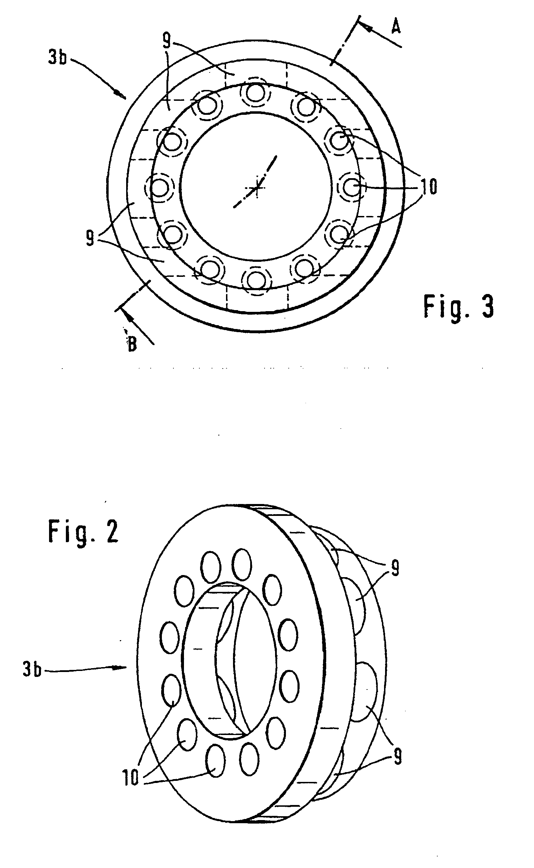

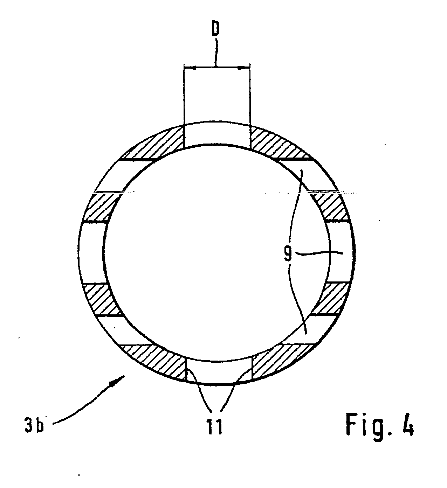

In den Figuren ist andeutungsweise ein Tandem-Hauptzylinder 1 gezeigt, wie er im Detail beispielsweise in der deutschen Patentschrift 196 10 834 beschrieben ist. Dieser Tandem-Hauptzylinder 1 ist Bestandteil einer hydraulischen Fahrzeugbremsanlage, welche in einem Fahrzeug mit Bremsdruckregelsystem (ABS und/oder ASR) zum Einsatz kommt. Dieser Hauptzylinder 1 weist eine stufenförmig ausgebildete Bohrung 2 auf. Das hier nicht gezeigte eine Ende dieser Bohrung 2 ist üblicherweise von einer zum Gehäuse des Hauptzylinders 1 gehörenden Stirnwand dicht verschlossen. Das diesem Ende gegenüberliegende andere Ende der Bohrung 2 weist den Dichtungseinsatz 3 auf, welcher nachfolgend noch näher beschrieben wird. Es sollte betont werden, daß der Dichtungseinsatz 3 in Fig. 1 nur grob dargestellt ist und für Details in sofern auf die nachfolgenden Darstellungen verwiesen sei. Aufgrund dieser Tatsache lassen sich auch ggf. Abweichungen in der Ausgestaltung erklären, wobei die Fig. 2 bis 5 allein maßgeblich sind .

In der Bohrung 2 ist in unmittelbarer Nachbarschaft zum Dichtungseinsatz 3 ein durch den Dichtungseinsatz 3 hindurch betätigbarer Kolben 4 abdichtend und axial verschieblich aufgenommen. In dem Kolben 4 ist ein Zentralventil 5 in einem Hohlraum 5' angeordnet. Dieses Zentralventil 5 liegt in Ruhestellung des Kolbens 4 an einer Anschlagringscheibe 6 an, welche ihrerseits gegen einen Dichtkörper 3a des Dichtungseinsatzes 3 anliegt. Hierdurch wird das Zentralventil 5 in Offenstellung gehalten.

Bei einer Betätigung der Bremsanlage wird der Kolben 4 über einen Betätigungsfortsatz 7 in der Figur 1 nach links verschoben, so daß sich das Zentralventil 5 von der Anschlagringscheibe 6 löst und geschlossen wird. Hierdurch kann nach entsprechend axialer Verschiebung des Kolbens 4 Fluiddruck in einer Druckkammer 8 aufgebaut werden. Während einer solchen Betätigung des Hauptzylinders 1 übernimmt der erfindungsgemäße Dichtungseinsatz 3 sowohl die Abdichtung der Bohrung 2 gegenüber dem Betätigungsfortsatz 7 als auch dessen Führung.

Die Entspannungsbewegung geschieht in umgekehrter Reihenfolge, das heißt der Kolben 4 verschiebt sich unter der Wirkung einer nicht dargestellten Rückstellfeder bezogen auf die Figur 1 nach rechts. Dementsprechend kommt das Zentralventil 5 kurz vor Erreichen der Ruhelage des Kolbens 4 in Anlage mit der Anschlagringscheibe 6, so daß sich das Zentralventil 5 wieder öffnen kann. Dementsprechend wird ein eventuell vorhandener, mehr oder minder geringer Restdruck in der Druckkammer 8 über nicht dargestellte Nachlaufbohrungen in ein ebenfalls nicht gezeigtes Fluidreservoir abgelassen. Für den Fall, daß kurz vor der Bremsbetätigung ein Bremsregelzyklus abgelaufen ist und dementsprechend die Druckkammer 8 ein zusätzliches Fluidvolumen aufweist, muß das Zentralventil 5 am Ende einer solchen Bremsung gegen einen zum Teil erheblichen Überdruck geöffnet werden. In einem solchen Fall verändert sich der Öffnungszeitpunkt des Zentralventiles 5 praktisch nicht, weil der aus der Druckkammer 8 über die Anschlagringscheibe 6 auf den Dichtungseinsatz 3 bzw. dessen Dichtkörper 3a übertragene Druck eine schnelle Komprimierung des Dichtkörpers 3a bewirkt, so daß sich die Anschlagringscheibe 6 praktisch verzögerungsfrei und ohne größeren Verformungen des Dichtkörpers 3a zu bewirken an den Dichtungseinsatz 3 anlegt. Wie dies im einzelnen erreicht wird, wird mit Bezug auf die Figuren 2-5 im folgenden erläutert.

Der Dichtungseinsatz 3 besteht in seinem grundsätzlichen Aufbau aus einem Tragkörper 3b und dem bereits angesprochenen, mit dem Tragkörper 3b adhäsiv verbundenen, gummielastischen Dichtkörper 3a. Der Tragkörper 3b mag als Kunststoff- oder auch Metallspritzgußteil ausgeführt sein, während der Dichtkörper 3a im Zuge üblicher Herstellungsverfahren an den Tragkörper 3b angespritzt wird. Der Tragkörper 3b weist Durchgangsbohrungen 9 auf, welche von dem Dichtkörper 3a zu seiner Verankerung durchdrungen sind. In axialer Richtung sind die Querbohrungen 9 etwa mittig an dem Tragkörper 3b angeordnet. Dies bringt den Vorteil mit sich, daß das Einschnürbestreben des Dichtkörpermaterials beim Erkalten des Dichtungswerkstoffs nach dem Spritzvorgang (unter hohem Druck und Temperatur) keine Auswirkung auf die Rundheit der Dichtlippe hat. Mit anderen Worten wird mit der beschriebenen Anordnung perfekte Rundheit erzielt. Die vollständige, feste Anspritzung gelingt im Zuge der Herstellung dadurch, daß mit den Durchgangsbohrungen 9 kommunizierende Querbohrungen 10 vorgesehen sind. Dabei ist zumindest eine Querbohrung 10 mit einer zugehörigen Durchgangsbohrung 9 verbunden.

Insbesondere anhand der Figur 3 erkennt man, daß die Querbohrungen 10 konzentrisch verteilt mit Bezug auf den Tragkörper 3b angeordnet sind. Vorliegend sind 12 Querbohrungen im Abstand von 30° verwirklicht. Die Durchgangsbohrungen 9 und die Querbohrungen 10 sind ausweislich der Figuren 2 bis 5 axial versetzt im Vergleich zu dem Tragkörper 3b angeordnet, so daß Verwindungen des Tragkörpers 3b nicht zu befürchten sind.

Die Figuren 2 bis 4 machen darüberhinaus deutlich, daß die Durchgangsbohrungen 9 im Vergleich zum (kreis-) ringförmig ausgebildetem Tragkörper 3b radial angeordnet sind. Dabei weisen gegenüberliegende Durchgangsbohrungen 9 parallele Begrenzungsflächen 11 auf, was sich für eine besonders kostengünstige Herstellung als vorteilhaft erwiesen hat. Die Begrenzungsflächen 11 schließen ein (offenes Kreisring)-Segment des Tragkörpers 3b vorgegebener Stärke D ein.

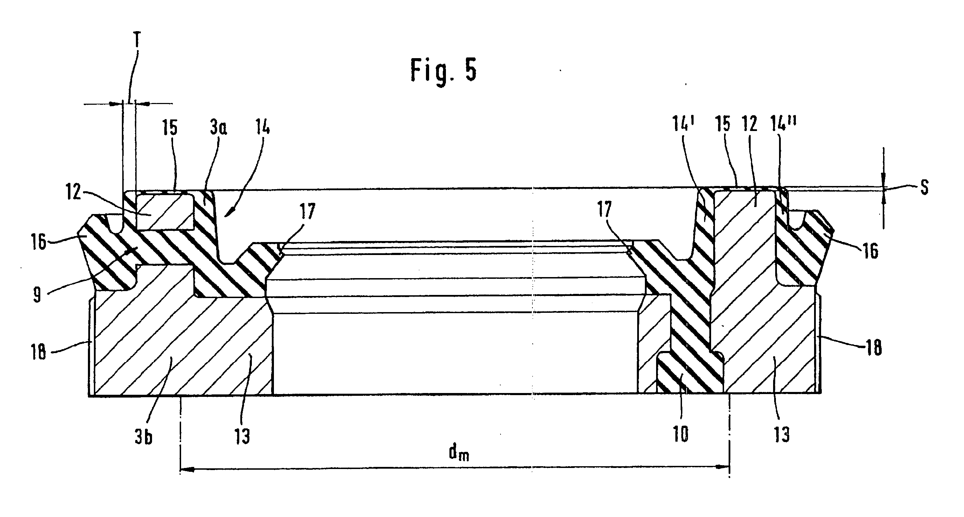

Anhand der Figur 5 kann man erkennen, daß der Tragkörper 3b im Querschnitt umgekehrt-T-förmig mit T-Steg 12 und T-Schenkel 13 ausgebildet ist. Der T-Steg 12 ist dem Zentralventil 5 zugewandt, während der T-Schenkel 13 dem Zentralventil 5 abgewandt angeordnet ist. Anhand der vorgenannten Darstellung kann man erkennen, daß die Durchgangsbohrungen 9 den T-Steg 12 durchdringen und die Querbohrungen 10 konzentrisch verteilt im T-Schenkel angeordnet sind. Grundsätzlich werden die Querbohrungen 10 rechtwinklig zu den Durchgangsbohrungen 9 angeordnet.

Der Dichtkörper 3a ist im Querschnitt umgekehrt-U-förmig mit beidseitig des T-Steges 12 angeordneten U-Schenkeln 14 und stirnseitig des T-Steges 12 befindlicher U-Basis 15 ausgeführt. Dabei besitzt die U-Basis 15 des Dichtkörpers 3a eine Stärke S, welche nach dem Ausführungsbeispiel in etwa ein Drittel der Stärke T der U-Schenkel 14 entspricht. Auf diese Weise wird erreicht, daß der T-Steg 12 den Dichtkörper 3a an dieser Stelle, das heißt im Bereich der U-Basis 15, nahezu vollständig durchsetzt. Folglich läßt der T-Steg 12 elastische Verformungen der U-Basis 15 hier nur begrenzt zu. Die U-Basis 15 bildet gleichsam nur eine dünne Haut über den vorgenannten T-Steg 12, so daß die Steuerzeiten des Zentralventils 5 praktisch nicht beeinflußt werden, egal wie stark der Fluiddruck in der Druckkammer 8 auch schwanken sollte. Dies ist bereits erläutert worden.

Schließlich weist der der Bohrung 2 zugewandte U-Schenkel 14 des Dichtkörpers 3a eine V-förmig angeformte Bohrungslippe 16 auf, die sich auf dem T-Schenkel 13 abstützt und für eine statische, das heißt gleitbewegungsfreie, Abdichtung an der Bohrungswandung sorgt. Der der Bohrung 2 abgewandte U-Schenkel 14'' des Dichtkörpers 3a besitzt eine ebenfalls V-förmige, angeformte und dynamisch infolge des verschiebbaren Kolbens beanspruchte, Dichtlippe die hier als angeformte Kolbendichtlippe 17 ausgeführt ist. Diese Kolbendichtlippe 17 stützt sich ebenfalls auf dem T-Schenkel 13 ab. Die Kolbendichtlippe 17 stellt gleichsam eine abstützende Innenmanschette für den Betätigungsfortsatz 7 dar. Zur guten Abstützung der Dichtlippen und zur Unterstützung der dynamischen sowie der statischen Dichtwirkung ist vorgesehen, daß sich der T-Steg weitgehend radial außerhalb eines mittleren Durchmessers dₘ des Dichtungskörpers 3a befindet. Durch diese Maßnahme wird eine starre Abstützung der statisch beanspruchten Dichtlippe 16 und eine elastisch flexible Abstützung der dynamisch beanspruchten Dichtlippe 17 bewirkt.

Schließlich weist der Tragkörper 3b unterhalb der Bohrungsdichtlippe 16 noch angeformte Aufnahmestege 18 auf, welche radial verteilt auf seinem Umfang am T-Schenkel 13 angeordnet sind. Diese Aufnahmestege 18 erleichtern eine automatische Montage, können beispielsweise mittels eines Greifers unschwer ergriffen werden, so daß eine einwandfreie Positionieren des Dichtungseinsatzes 3 im zugehörigen Gehäuse des Tandem-Hauptzylinder 1 bzw. dessen Bohrung 2 ermöglicht wird.

## Patentansprüche

1. Hauptzylinder mit einem Kolben(4) für eine hydraulische Fahrzeugbremsanlage mit in einem Hohlraum (5') angeordnetem Zentralventil (5) und einem Dichtungseinsatz (3) mit einem Tragkörper (3b) und einem mit dem Tragkörper (3b) adhäsiv verbundenen gummielastischen Dichtkörper (3a), **dadurch gekennzeichnet, daß** der Tragkörper (3b) Durchgangsbohrungen (9) aufweist, welche von dem Dichtkörper (3a) zu seiner Verankerung durchdrungen sind, wobei der Tragkörper (3b) im Querschnitt umgekehrt-T-förmig mit T-Steg (12) und T-Schenkel (13) ausgebildet ist, wobei der T-Steg (12) dem Zentralventil (5) zugewandt, und der T-Schenkel (13) dem Zentralventil (5) abgewandt angeordnet ist, wobei der Dichtkörper (3a) im Querschnitt umgekehrt-U-förmig mit beidseitig des T-Steges (12) angeordneten U-Schenkeln (14',14") und stirnseitig des T-Steges (12) befindlicher U-Basis (15) ausgebildet ist und die U-Basis (15) des Dichtkörpers (3a) eine Stärke (S) aufweist, welche der Hälfte bis ein Fünftel, vorzugsweise ein Drittel, der Stärke (T) der U-Schenkel (14) entspricht, so daß der T-Steg (12) den Dichtkörper (3a) an dieser Stelle nahezu vollständig durchsetzt und elastische Verformungen der U-Basis (15) nur begrenzt zuläßt.

2. Hauptzylinder nach Anspruch 1, **dadurch gekennzeichnet, daß** die Durchgangsbohrungen (9) im Vergleich zum ringförmigen Tragkörper (3b) radial angeordnet sind.

3. Hauptzylinder nach einem der Ansprüche 1 oder 2, **dadurch gekennzeichnet, daß** gegenüberliegende Durchgängsbohrungen (9) parallele Begrenzungsflächen (11) aufweisen.

4. Hauptzylinder nach Anspruch 3, dadurch **gekennzeiehnet,** daß die Durchgangsbohrungen (9) den T-Steg (12) durchdringen.

5. Hauptzylinder nach einem der Ansprüche 1 bis 4, **dadurch gekennzeichnet, daß** mit den Durchgangsbohrungen (9) kommunizierende Querbohrungen (10) vorgesehen sind.

6. Hauptzylinder nach Anspruch 5, **dadurch gekennzeichnet, daß** zumindest eine Querbohrung (10) mit einer Durchgangsbohrung (9) verbunden ist.

7. Hauptzylinder nach Anspruch 5, **dadurch gekennzeichnet, daß** die Querbohrungen (20) konzentrisch verteilt im T-Schenkel (13) angeordnet sind.

8. Hauptzylinder nach Anspruch 5, **dadurch gekennzeichnet, daß** die Durchgangsbohrungen (9) und die Querbohrungen (10) axial versetzt im Tragkörper (3b) angeordnet sind,

9. Hauptzylinder nach Anspruch 5, **dadurch gekennzeichnet, daß** die Querbohrungen (10) rechtwinklig zu den Durchgangsbohrungen (9) angeordnet sind.

10. Hauptzylinder nach einem der Ansprüche 1 bis 9, **dadurch gekennzeichnet, daß** der einer Bohrung (2) zugewandte U-Schenkel (14') des Dichtkörpers (3a) eine V-förmig angeformte Bohrungsdichtlippe (16) aufweist, die sich auf dem T-Schenkel (13) abstützt.

11. Hauptzylinder nach Anspruch 10, **dadurch gekennzeichnet, daß** der der Bohrung (2) abgewandte U-Schenkel (14"), des Dichtkörpers (3a) eine V-förmig angeformte Kolbendichtlippe (17) aufweist, die sich auf dem T-Schenkel (13) abstützt.

## Claims

1. Master cylinder with a piston (4) for a hydraulic vehicle brake system, comprising a central valve (5) arranged in a cavity (5') and a sealing insert (3) with a supporting body (3b) and a rubber-elastic sealing body (3a) that is adhesively connected to said supporting body (3b),
**characterized in that** the supporting body (3b) includes through holes (9) which are penetrated by the sealing body (3a) for fixing purposes, wherein the supporting body (3b), when viewed in its cross-section, is formed like an upside-down T with T-bridge (12) and T-leg (13), with the T-bridge (12) facing the central valve (5) and the T-leg (13) facing away from the central valve (5), wherein the sealing body (3a), when viewed in its cross-section, is formed like an upside-down U with U-legs (14', 14 ") arranged on both sides of the T-bridge (12) and a U-base (15) located at the face of the T-bridge (12), and the thickness (S) of the U-base (15) of the sealing body (3a) corresponds to about one-half to one-fifth, preferably one-third, of the thickness (T) of the U-legs (14), so that the T-bridge (12) almost completely penetrates the sealing body (3a) at this point, permitting only limited elastic deformations of the U-base (15).

2. Master cylinder according to Claim 1,
**characterized in that** the through holes (9) are disposed in a radial direction in relation to the ring-shaped supporting body (3b).

3. Master cylinder according to Claim 1 or 2,
**characterized in that** the through holes (9) lying opposite one another exhibit parallel areas of contact (11).

4. Master cylinder according to Claim 3,
**characterized in that** the through holes (9) penetrate the T-bridge (12).

5. Master cylinder according to any one of Claims 1 to 4,
**characterized in that** cross holes (10) which communicate with the through holes (9) are provided.

6. Master cylinder according to Claim 5,
**characterized in that** at least one cross hole (10) is connected to a through hole (9).

7. Master cylinder according to Claim 5,
**characterized in that** the cross holes (10) are distributed concentrically in the T-leg (13).

8. Master cylinder according to Claim 5,
**characterized in that** the through holes (9) and cross holes (10) are arranged in axially offset positions in the supporting body (3b).

9. Master cylinder according to Claim 5,
**characterized in that** the cross holes (10) are arranged at right angles to the through holes (9).

10. Master cylinder according to any one of Claims 1 to 9,
**characterized in that** the U-leg (14') of the sealing body (3a) which faces a hole (2) includes a V-shaped hole seal lip (16) that is formed on it, with said seal lip (16) being supported on the T-leg (13).

11. Master cylinder according to Claim 10,
**characterized in that** the U-leg (14 ") of the sealing body (3a) which faces away from the hole (2) includes a V-shaped piston seal lip (17) that is formed on it, with said seal lip (17) being supported on the T-leg (13).

## Revendications

1. Maître-cylindre comportant un piston (4) pour un système hydraulique de freinage de vehicule avec une soupape centrale (5) disposée dans une cavité (5') et une garniture d'étanchéité (3) avec un corps porteur (3b) et un corps d'étanchéité (3a) présentant l'élasticité du caoutchouc et relié de manière adhésive au corps porteur (3b), **caractérisé en ce que** le corps porteur (3b) présente des perçages traversants (9) qui sont traversés par le corps d'étanchéité (3a) pour son ancrage, le corps porteur (3b) présentant une section transversale en forme de T inversé avec traverse de T (12) et branche de T (13), la traverse du T (12) étant tournée vers la soupape centrale (5) et la branche du T (13) étant tournée à l'opposé de la soupape centrale (5), le corps d'étanchéité (3a) présentant une section transversale en forme de U inversé avec des branches du U (14', 14") disposées des deux côtés de la branche du T (12) et la base du U (15) se trouvant sur le côté frontal de la traverse du T (12), et la base du U (15) du corps d'étanchéité (3a) présentant une épaisseur (S) qui correspond à la moitié jusqu'à un cinquième, de préférence à un tiers, de l'épaisseur (T) des branches du U (14), ce qui fait que la branche du T (12) traverse presque entièrement le corps d'étanchéité (3a) en cet endroit et n'autorise des déformations élastiques de la base du U (15) que dans une mesure limitée.

2. Maître-cylindre selon la revendication 1, **caractérisé en ce que** les perçages traversants (9) sont disposés radialement par rapport au corps porteur (3b) de forme annulaire.

3. Maître-cylindre selon l'une des revendications 1 ou 2, **caractérisé en ce que** des perçages traversants (9) opposés présentent des surfaces de délimitation (11) parallèles.

4. Maître-cylindre selon la revendication 3, **caractérisé en ce que** les perçages traversants (9) traversent la traverse du T (12).

5. Maître-cylindre selon l'une des revendications 1 à 4, **caractérisé en ce que** des perçages transversaux (10) communiquant avec les perçages traversants (9) sont prévus.

6. Maître-cylindre selon la revendication 5, **caractérisé en ce qu'**au moins un perçage transversal (10) est relié à un perçage traversant (9).

7. Maître-cylindre selon la revendication 5, **caractérisé en ce que** les perçages transversaux (10) sont disposeés répartis concentriquement dans la branche du T (13).

8. Maître-cylindre selon la revendication 5, **caractérisé en ce que** les perçages traversants (9) et les perçages traversaux (10) sont disposés décalés axialement dans le corps porteur (3b).

9. Maître-cylindre selon la revendication 5, **caractérisé en ce que** les perçages transversaux (10) sont disposés à angle droit par rapport aux perçages traversants (9).

10. Maître-cylindre selon l'une des revendications 1 à 9, **caractérisé en ce que** la branche du U (14') du corps d'étanchéité (3a), tournée vers un perçage (2), présente une lèvre d'étanchéité du perçage (16) venue de moulages et en forme de V, qui prend appui sur la branche du T (13).

11. Maître-cylindre selon la revendication 10, **caractérisé en ce que** la branche du U (14") du corps d'étanchéité (3a), tournée à l'opposé du perçage (2), comporte une lèvre d'étanchéité du piston (17) venue de moulage et en forme de V qui prend appui sur la branche du T (13).
